(19) Europäisches Patentamt
European Patent Office
Office européen des brevets

(11) **EP 3 053 262 B1**

(12) **FASCICULE DE BREVET EUROPEEN**

(45) Date de publication et mention de la délivrance du brevet:
**23.09.2020 Bulletin 2020/39**

(21) Numéro de dépôt: **14790220.9**

(22) Date de dépôt: **02.10.2014**

(51) Int Cl.:
*H02P 25/22* *(2006.01)*    *H02K 1/27* *(2006.01)*
*H02K 3/28* *(2006.01)*

(86) Numéro de dépôt international:
**PCT/FR2014/052496**

(87) Numéro de publication internationale:
**WO 2015/049467 (09.04.2015 Gazette 2015/14)**

(54) **MACHINE ELECTRIQUE TOURNANTE POLYPHASEE A AU MOINS CINQ PHASES**

MEHRPHASIGE ELEKTRISCHE DREHENDE MASCHINE MIT MINDESTENS FÜNF PHASEN

MULTIPHASE ELECTRIC ROTATING MACHINE WITH AT LEAST FIVE PHASES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.10.2013 FR 1359560**

(43) Date de publication de la demande:
**10.08.2016 Bulletin 2016/32**

(73) Titulaire: **Valeo Equipements Electriques Moteur 94046 Créteil Cedex (FR)**

(72) Inventeurs:
• **LEGRANGER, Jérome**
  **F-94000 Creteil (FR)**
• **ASLAN, Bassel**
  **F-75012 Paris (FR)**
• **SEMAIL, Eric**
  **F-59800 Lille (FR)**

(56) Documents cités:
**EP-A1- 1 942 572**          **EP-A1- 2 541 735**
**DE-A1-102008 057 391**   **US-A- 5 053 689**
**US-A1- 2011 043 154**      **US-A1- 2013 093 284**

**Description**

**DOMAINE TECHNIQUE DE L'INVENTION**

La présente invention porte sur une machine électrique tournante polyphasée à au moins cinq phases.

L'invention trouve une application particulièrement avantageuse dans le domaine des alternateurs, des alterno-démarreurs, ou des machines électriques de traction de véhicule automobile.

**ARRIERE PLAN TECHNOLOGIQUE**

De façon connue en soi, une machine électrique tournante comporte un stator muni de bobinages entourant un rotor solidaire d'un arbre. Le rotor et le stator sont espacés entre eux par un entrefer. Le rotor pourra être solidaire d'un arbre menant et/ou mené et pourra appartenir à une machine électrique tournante sous la forme d'un alternateur comme décrit dans le document EP0803962 ou d'un moteur électrique comme cela est décrit dans le document EP0831580.

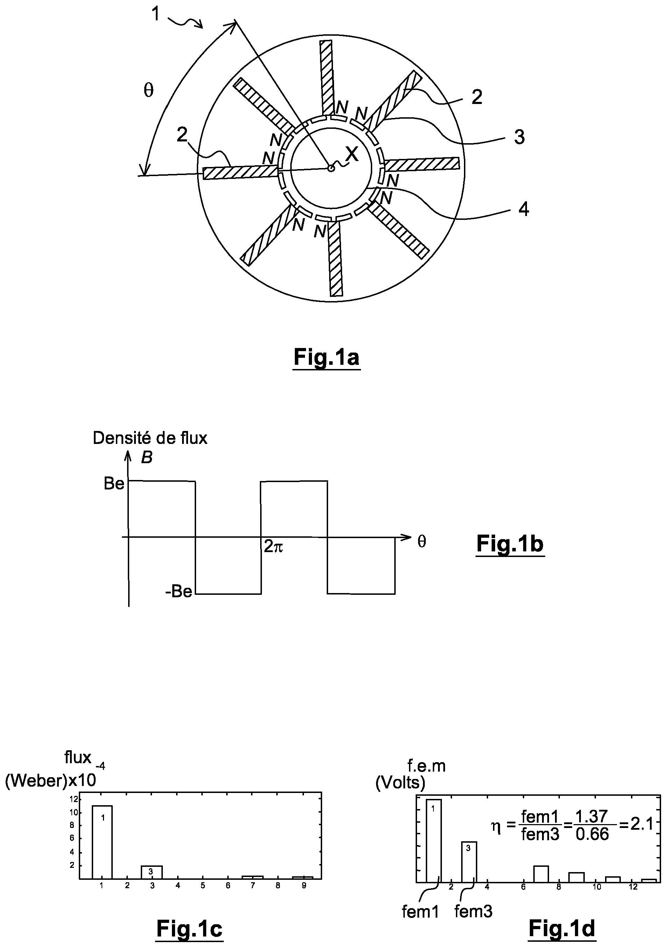

La machine électrique comporte un boîtier portant le stator. Ce boîtier est configuré pour porter à rotation l'arbre par exemple par l'intermédiaire de roulements, tel que des roulements à billes et/ou à aiguilles. Le rotor pourra comporter un corps réalisé en tôle feuilletée. Le rotor comporte un nombre de paires de pôles. Comme cela est représenté sur la figure 1a, le rotor 1 d'axe X comporte des pôles formés par des aimants permanents 2 logés dans des cavités 3 ménagées dans la masse magnétique du rotor. Les aimants 2 sont arrangés en sorte que le rotor présente une alternance radiale de pôles nord et de pôles sud. Une ouverture 4 axiale traversante autorise le passage de l'arbre du rotor (non représenté). En l'occurrence, le rotor 1 comporte huit aimants permanents formant quatre paires de pôles, chaque aimant étant disposé de manière radiale par rapport à l'axe du rotor de façon à obtenir une structure de rotor de type à concentration de flux.

Alternativement, les paires de pôles peuvent comprendre des pôles dits saillants comprenant des bobines enroulées autour de bras radiaux du rotor. Dans ce cas, un pôle est formé par une bobine.

Par ailleurs, le stator comprend des encoches ouvertes vers l'intérieur qui sont délimitées par des dents issues de la culasse correspondant à une bande de matière d'orientation annulaire du stator. Alternativement, la machine comporte un rotor extérieur et un stator intérieur, comme par exemple pour des moteurs roues. Dans ce cas, le stator comporte des encoches ouvertes vers l'extérieur. Ces dents sont espacées régulièrement sur la circonférence interne du stator et s'étendent radialement vers l'intérieur du stator. Il existe de nombreux procédés de bobinage d'un stator. Parmi ceux-ci, il est connu un bobinage concentrique selon lequel le bobinage est concentré autour des dents prises une à une. Pour ce type de bobinage, le nombre de dents du stator est égal à celui du nombre de bobines. De ce fait, dans une encoche du stator délimitée par deux dents consécutives du stator, il y a deux paquets de fils l'un à côté de l'autre appartenant à deux bobines différentes. Le nombre de paires de pôles aménagés dans le rotor peut varier selon les applications de la machine tournante, de même que le nombre d'encoches du stator recevant les bobinages.

L'invention part du constat que dans le cas d'une machine triphasée couplée en étoile sans neutre sorti, on ne dispose que de trois bornes de sortie. On ne peut donc mesurer qu'une force électromotrice entre phases qui est une différence entre deux forces électromotrices de phase. Chaque force électromotrice de phase peut comporter un harmonique de rang trois. En revanche, la force électromotrice entre phases ne peut pas comporter une harmonique de rang trois du fait du caractère homopolaire du troisième harmonique, à savoir que les trois composantes d'harmoniques de rang trois de force électromotrice sont identiques (même forme temporelle et même phase). Si le couplage est en triangle, on peut voir apparaître un harmonique de rang trois de force électromotrice car entre deux bornes de sortie on a directement une tension de phase. Toutefois, l'alimentation en tension ne permettra pas d'imposer un courant d'harmonique de rang trois. Ce courant pourra exister dans la machine mais ne pourra produire que des pertes (et donc un couple de freinage).

En conséquence, si on considère une machine à n phases alimentées par n bras d'onduleur, alors il est nécessaire que n soit égal ou supérieur à cinq pour pouvoir tirer parti de l'harmonique de rang trois de force électromotrice afin de créer un couple utile.

Il est donc possible de considérer une machine à cinq phases ou plus comme une machine ayant un couple dont l'origine provient au moins de deux harmoniques de force électromotrice, un harmonique de rang 1 et un harmonique de rang 3. Tant qu'il n'y a pas de phénomène de saturation (de la machine ou de l'onduleur) et/ou d'effet de réluctance variable, tant que la machine est régulièrement construite (c'est à dire qu'il est impossible de distinguer une phase d'une autre phase), alors il est possible de montrer que les deux fractions de couple dont la somme constitue le couple total sont créées par deux machines découplées magnétiquement, ces deux machines étant qualifiées de "fictives" dans la mesure où elles ne correspondent pas à une machine réelle. La machine fictive commandée essentiellement par un premier harmonique de courant (harmonique de rang 1) correspond à la machine dite principale. L'autre machine fictive commandée essentiellement par un troisième harmonique de courant (harmonique de rang 3) correspond à la machine dite secondaire. Les commandes de ces deux machines peuvent être indépendantes, chaque commande contrôlant l'injection d'un harmonique de courant parmi les harmoniques 1 et 3, l'harmonique 1 dans la machine principale, l'harmonique 3 dans la machine secondaire.

Par rapport à une machine triphasée, les machines polyphasées ayant un nombre de phases impair égal à cinq ou plus offrent ainsi un degré de liberté supplémentaire lié à l'injection d'un troisième harmonique de courant pour la commande de la machine secondaire. En injectant ce troisième harmonique de courant, le couple produit par la machine peut ainsi théoriquement être augmenté.

Toutefois, les structures classiques de rotor imposent une densité de flux magnétique B représentée sur la figure 1b présentant une forme en créneau. Or le troisième harmonique d'une telle répartition de densité de flux magnétique est inférieur ou égale à 33% de l'harmonique fondamental. Une telle structure, même avec un bobinage adapté (facteur de bobinage élevé pour l'harmonique 3) ne permet donc pas d'obtenir une valeur suffisamment élevée du troisième harmonique de flux capté et de force électromotrice (cf. figures 1c et 1d) pour exploiter de manière optimale le couple produit par la machine fictive secondaire.

Le document US 5,053,689 décrit une méthode pour améliorer les performances d'une machine électrique tournante, notamment un alternateur, en excitant ladite machine et en particulier le bobinage du stator avec des fréquences présentant des harmoniques impairs.

Le document US 2013/0093284 décrit un rotor à aimants permanents pour une machine électrique tournante permettant de réduire les pertes fer. Un tel rotor présente, dans une direction radiale, des saillies ou des rainures permettant de créer une forme de vague à la surface du rotor.

## OBJET DE L'INVENTION

L'invention vise à remédier efficacement à cet inconvénient en proposant une machine électrique tournante polyphasée à au moins cinq phases comportant un stator bobiné et un rotor, ledit rotor étant séparé dudit stator par un entrefer, ledit rotor comportant un ensemble de pôles principaux de polarités alternées, caractérisée en ce que ledit rotor est configuré de manière à maximiser un troisième harmonique d'une densité de flux magnétique rotorique dans ledit entrefer de ladite machine électrique.

L'invention permet ainsi d'augmenter le troisième harmonique de force électromotrice, ce qui maximise le couple produit par la machine fictive secondaire et donc le couple total produit par la machine électrique.

De plus, l'entrefer comporte des zones de densité de flux magnétique rotorique ayant une valeur absolue sensiblement nulle. L'invention permet de générer une densité de flux magnétique rotorique dans l'entrefer ayant la forme d'un signal de forme rectangulaire présentant, sur chaque demi-période, une plage dans laquelle la densité de flux magnétique rotorique a une valeur absolue sensiblement nulle. On augmente ainsi le troisième harmonique de densité de flux magnétique rotorique dans l'entrefer par rapport à un signal de forme rectangulaire, comme c'est le cas pour le rotor de l'état de la technique.

En outre, chaque zone de densité de flux magnétique rotorique ayant une valeur absolue sensiblement nulle s'étend sensiblement au milieu d'un pôle principal correspondant.

Selon une réalisation, chaque zone de densité de flux magnétique rotorique ayant une valeur absolue sensiblement nulle est générée par un évidement ménagé dans une périphérie externe dudit rotor.

Selon une réalisation, chaque zone de densité de flux magnétique rotorique ayant une valeur absolue sensiblement nulle est générée par un pôle supplémentaire ayant une polarité inversée par rapport à une polarité d'un pôle principal correspondant dudit rotor.

Selon une réalisation, chaque pôle supplémentaire est formé par deux aimants permanents situés en vis-à-vis l'un par rapport à l'autre.

Selon une réalisation, des chambres d'air sont positionnées au niveau d'une extrémité de chaque aimant permanent. Cela permet de minimiser les fuites magnétiques du rotor.

Selon une réalisation, un rapport entre un encombrement angulaire d'une desdites zones de densité de flux magnétique rotorique ayant une valeur absolue sensiblement nulle et un encombrement angulaire d'un pôle principal est compris entre 0.15 et 0.54.

Selon une réalisation, un coefficient égal au nombre d'encoches du stator par nombre de pôles principaux et par nombre de phases (SPP) vaut 0.5. L'intérêt d'une telle famille de machines électriques est que le facteur de bobinage du stator de troisième harmonique est particulièrement élevé, ce qui permet de renforcer la valeur du troisième harmonique de force électromotrice.

Selon une réalisation, la machine comporte cinq phases et 20 encoches ménagées dans le stator pour 8 pôles principaux rotoriques.

Selon une réalisation, la machine comporte un système de contrôle comportant, pour chaque phase, un système de commande apte à déterminer un premier et un troisième harmoniques de courant de consigne dont les valeurs efficaces dépendent d'une valeur efficace d'un courant parcourant la machine et d'un rapport, ledit rapport dépendant d'un ratio entre une amplitude maximale d'un premier et d'un troisième harmoniques de force électromotrice de la machine électrique, de manière à maximiser un couple électromagnétique produit par la machine électrique.

Selon une réalisation, le premier harmonique de courant de consigne a une valeur efficace égale à la valeur efficace du courant pondérée par ledit rapport.

Selon une réalisation, le troisième harmonique de courant de consigne a une valeur efficace égale à $\sqrt{1 - r^2}\,I_{efficace}$ , r étant le rapport et $I_{efficace}$ étant la valeur efficace du courant parcourant la machine.

Selon une réalisation, ledit rapport (r) est égal à:

$$\frac{\dfrac{fem_1}{fem_3}}{\sqrt{1 + (\dfrac{fem_1}{fem_3})^2}}$$

fem1 et fem3 correspondant respectivement à une amplitude maximale du premier et du troisième harmoniques de la force électromotrice de la machine électrique.

Selon une réalisation, ledit système de contrôle est apte à produire un premier harmonique de courant de consigne en phase avec un premier harmonique de force électromotrice d'une des phases de la machine, ainsi qu'un troisième harmonique de courant de consigne en phase avec un troisième harmonique de force électromotrice de ladite une des phases de la machine électrique.

Selon une réalisation, pour chaque phase, ledit système de contrôle est apte à assurer une régulation d'un premier et d'un troisième harmoniques de tension appliqués à la machine électrique en fonction d'une comparaison entre les premier et troisième harmoniques de courant de consigne et des valeurs de premier et troisième harmoniques de courant mesurées ou estimées au niveau de la machine.

Selon une réalisation, ledit système de contrôle est apte, pour toutes les phases, à

- projeter chacun des premier et troisième harmoniques de courant de consigne sur deux axes en quadrature,
- comparer pour chacun des premier et troisième harmoniques de courant, les deux composantes projetées avec leur composante correspondante issue d'une projection sur deux axes en quadrature des courants mesurés ou estimés, et
- appliquer une transformation inverse sur des écarts issus de ladite comparaison de manière à obtenir respectivement les premier et troisième harmoniques de tension destinés à être appliqués sur la machine électrique.

Selon une réalisation, ledit système de contrôle est apte à corriger lesdits écarts issus de ladite comparaison avant application de ladite transformation inverse.

## BREVE DESCRIPTION DES FIGURES

L'invention sera mieux comprise à la lecture de la description qui suit et à l'examen des figures qui l'accompagnent. Ces figures ne sont données qu'à titre illustratif mais nullement limitatif de l'invention.

La figure 1a, déjà décrite, est une vue schématique en coupe transversale d'un rotor de machine électrique selon l'état de la technique;

La figure 1b, déjà décrite, est une représentation graphique de la densité de flux magnétique rotorique produite par le rotor de la figure 1a en fonction d'une position angulaire θ dans l'entrefer;

La figure 1c, déjà décrite, représente le spectre de flux obtenu pour une machine polyphasée munie du rotor de la figure 1a pour une spire et pour un bobinage concentré autour des dents du stator avec un coefficient SPP valant 0.5 par pôle et par phase;

La figure 1d représente le spectre de force électromotrice obtenu pour une machine pentaphasée munie du rotor de la figure 1a pour une spire à une vitesse de 3000 tours par minute et pour un bobinage concentré autour des dents du stator avec un coefficient SPP valant 0.5 par pôle et par phase;

Les figures 2a et 2b sont des vues schématiques en coupe transversale de deux modes de réalisation d'un rotor de machine électrique polyphasée selon la présente invention;

La figure 3 est une représentation graphique de la densité de flux magnétique rotorique produite par les rotors des figures 2a et 2b en fonction d'une position angulaire θ dans l'entrefer;

Les figures 4a et 4b représentent des spectres de flux obtenus respectivement pour une machine pentaphasée munie du rotor de la figure 2a et du rotor de la figure 2b pour une spire et avec le stator de la figure 7;

Les figures 5a et 5b représentent des spectres de force électromotrice obtenus respectivement pour une machine pentaphasée munie du rotor de la figure 2a et du rotor de la figure 2b pour une spire à une vitesse de 3000 tours par minute et avec le stator de la figure 7;

La figure 6 est une représentation graphique de la variation du couple maximal produit par la machine électrique selon l'invention en fonction d'un rapport entre un encombrement angulaire de chaque zone de densité de flux magnétique rotorique ayant une valeur absolue sensiblement nulle et un encombrement angulaire d'un pôle principal du rotor;

La figure 7 est une vue schématique en coupe transversale d'un stator de la machine électrique pentaphasée selon la présente invention;

La figure 8 est un tableau indiquant des facteurs de bobinage d'un premier et d'un troisième harmoniques pour différentes combinaisons du nombre d'encoches du stator et du nombre de pôles principaux du rotor pour une machine électrique pentaphasée;

Les figures 9a et 9b sont des représentations graphiques du couple produit par une machine électrique pentaphasée munie d'un rotor selon la figure 1a (figure 9a) ou d'un rotor selon la présente invention (figure 9b) suivant différents cas de commande en courant de la machine;

La figure 10a est une représentation schématique fonctionnelle d'un système de contrôle de la machine électrique selon la présente invention;

La figure 10b est un exemple de réalisation d'un module de boucle de contrôle en courant intégré au système de contrôle de de la figure 10a.

Les éléments identiques, similaires, ou analogues conservent la même référence d'une figure à l'autre.

## DESCRIPTION D'EXEMPLES DE REALISATION DE L'INVENTION

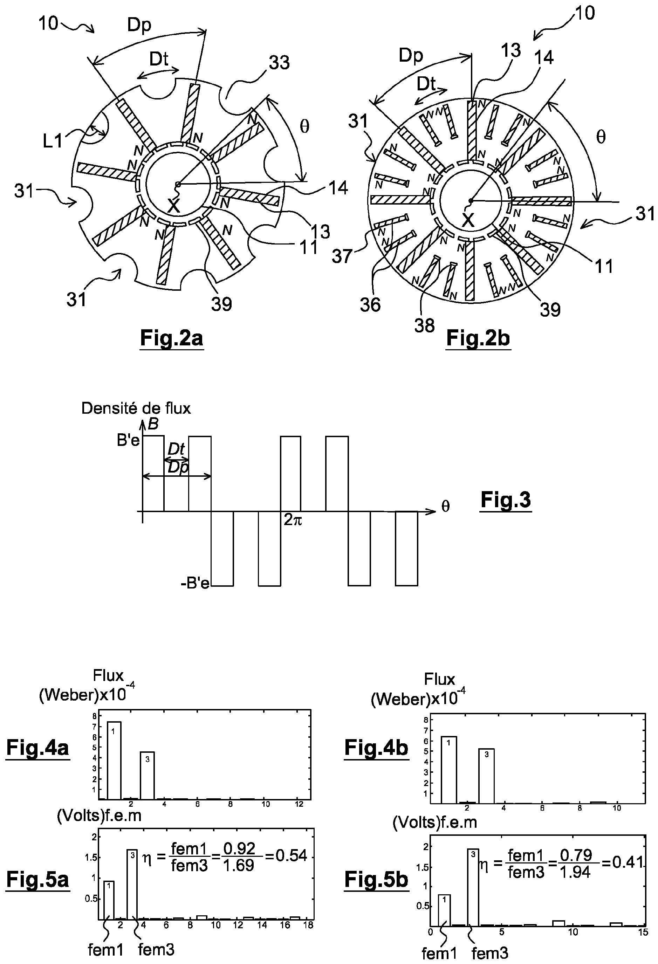

Les figures 2a et 2b montrent deux modes de réalisation d'un rotor 10 de machine électrique polyphasée à au moins cinq phases selon la présente invention. Le rotor 10 d'axe X est formé par un empilement de tôles en matière ferromagnétique. Les tôles du paquet sont maintenues au moyen de rivets (non référencés) traversant axialement de part en part l'empilement des tôles via des ouvertures pour formation d'un ensemble manipulable et transportable. Ce rotor 10 comporte une ouverture traversante 11 pour autoriser le passage d'un arbre (non représenté).

Ce rotor 10 comporte un nombre de paires de pôles principaux. Les paires de pôles principaux sont formées par des aimants permanents 13 logés dans des cavités 14 de forme complémentaire ménagés dans la masse magnétique du rotor. Les aimants 13 sont arrangés en sorte que le rotor 10 présente une alternance radiale de pôles principaux nord et de pôles principaux sud.

Chaque aimant 13 présente une forme de pavé de section sensiblement rectangulaire. Chaque aimant 13 est disposé de manière radiale par rapport à l'axe X du rotor 10 de façon à obtenir une structure de rotor de type à concentration de flux.

En l'occurrence, le rotor 10 comporte huit aimants 13 permanents formant quatre paires de pôles principaux. Les aimants 13 peuvent avantageusement être segmentés radialement, par exemple en deux, trois ou quatre parties.

On constate ainsi qu'une segmentation radiale en trois parties permet une réduction de pertes fer rotoriques à hauteur de 80 %. Par ailleurs, afin de diminuer les pertes volumiques par courants induits dans les aimants 13, on adapte la longueur de chaque pôle d'aimant en fonction de cette segmentation radiale.

Alternativement, les paires de pôles principaux peuvent comprendre des pôles dits saillants comprenant des bobines enroulées autour de bras radiaux du rotor 10. Dans ce cas, un pôle principal est formé par une bobine.

**EP 3 053 262 B1**

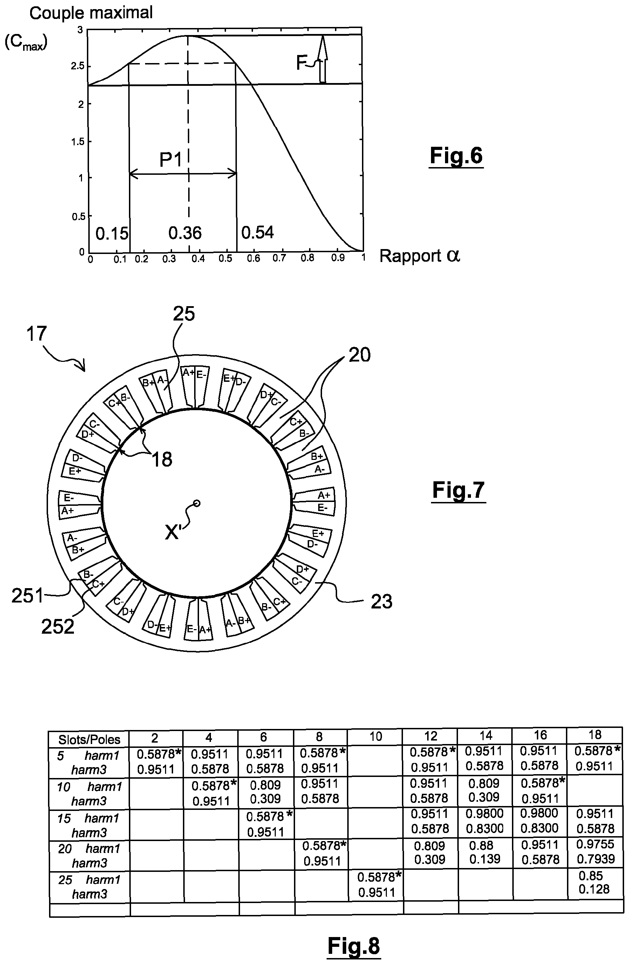

Un stator 17 montré sur la figure 7 est destiné à être positionné autour du rotor 10. Le rotor 10 est séparé du stator 17 par un entrefer. Le corps du stator 17 est formé par un empilement de tôles réalisées en matière ferromagnétique. Le paquet de tôles est maintenu au moyen de rivets (non représentés) traversant axialement de part en part l'empilement des tôles.

Le stator 17 présente un axe X' destiné à se confondre avec l'axe X lorsque le rotor 10 est monté à l'intérieur du stator 17. Le stator 17 comprend des encoches 18 ouvertes vers l'intérieur qui sont délimitées par des dents 20 issue d'une culasse 23 correspondant à une bande de matière annulaire d'orientation axiale du stator 17. Les dents 20 sont espacées de manière régulière sur la périphérie interne du stator 17. Chaque encoche du stator 17 est ainsi délimitée par deux dents 20 consécutives. Le bobinage est de type concentrique double couche. Le bobinage est ainsi formé par des bobines 25 entourant chacune une dent 20 du stator 17. Pour ce type de bobinage, le nombre de dents 20 du stator 17 est égal à celui du nombre de bobines. De ce fait, dans une encoche du stator 17, il y a deux paquets de fils 251, 252 l'un à côté de l'autre appartenant à deux bobines 25 différentes.

Le rotor 10 est configuré de manière à maximiser le troisième harmonique de densité de flux magnétique rotorique dans l'entrefer de la machine. A cet effet, l'entrefer comporte des zones 31 où la densité de flux magnétique rotorique a une valeur absolue sensiblement nulle. La densité de flux magnétique pourra ainsi avoir une valeur nulle ou une valeur très légèrement supérieure ou inférieure à 0. En tout état de cause, la valeur absolue de densité de flux magnétique rotorique dans les zones 31 n'excédera pas 10% de la valeur maximale de la densité de flux maximale dans l'entrefer. Pour une machine présentant par exemple une densité de flux magnétique maximum de l'ordre de 1 Tesla, la valeur de densité de de flux magnétique dans les zones 31, qui est proportionnelle à l'inverse de la distance de l'entrefer, sera au plus égal à 0.1. Chaque zone 31 de densité de flux magnétique rotorique s'étend sensiblement au milieu d'un pôle principal du rotor 10.

Dans le mode de réalisation de la figure 2a, chaque zone 31 de densité de flux magnétique ayant une valeur absolue sensiblement nulle est générée par un évidement 33 creusé à la périphérie externe du rotor 10 sensiblement au milieu d'un pôle principal correspondant. Cela permet d'augmenter la réluctance magnétique et d'annuler le champ magnétique en face de chacun de ces évidements 33. Ces évidements 33 créent ainsi des barrières de flux, en sorte que l'on observe un phénomène de concentration de flux magnétique dans les zones où ce dernier peut circuler. Chaque évidement 33 présente une profondeur L1 au moins égale à deux fois la distance de l'entrefer de la machine électrique.

Dans le mode de réalisation de la figure 2b, deux aimants permanents 36 sont positionnés sensiblement au milieu de chaque pôle. Ces aimants permanents 36 définissent un pôle supplémentaire ayant une polarité inversée par rapport à celle du pôle principal du rotor correspondant. Ainsi, comme cela ressort de la figure 2b, pour deux faces en vis-à-vis de deux aimants permanents 13 successifs ayant une même polarité (Nord-Nord ou Sud-Sud), les faces en vis-à-vis des deux aimants permanents 36 situés entre ces deux aimants permanents 13 présentent une polarité inversée.

Les pôles supplémentaires ainsi créés empêchent le flux magnétique de traverser la partie médiane de chaque pôle principal et imposent une densité de flux magnétique nulle dans l'entrefer en face de ces pôles supplémentaires. Les aimants 36 créent ainsi des barrières de flux, en sorte que l'on observe un phénomène de concentration de flux magnétique dans les zones où ce dernier peut circuler. Alternativement, les pôles supplémentaires comme les pôles principaux pourront être formés par des bobines.

Les aimants 36 sont positionnés à l'intérieur de cavités 37 d'orientation radiale par rapport à l'axe X du rotor 10. Des chambres d'air 38 sont positionnées à la base de chaque aimant 36 afin de réduire au maximum les fuites magnétiques. Dans ce même but, des chambres d'air 39 pourront être ménagées à la base des aimants 13 dans les deux modes de réalisation du rotor 10. Les chambres d'air 38 et 39 sont en l'occurrence situées du côté de l'axe X du rotor.

Comme on peut le voir sur la figure 3, une telle configuration permet de produire une densité de flux magnétique rotorique dans l'entrefer ayant la forme d'un signal de forme rectangulaire présentant, sur chaque demi-période, une plage dans laquelle la densité de flux magnétique a une valeur absolue sensiblement nulle. On augmente ainsi le troisième harmonique du flux magnétique rotorique capté (cf. figures 4a et 4b) par rapport à celui d'un signal de forme purement rectangulaire comme c'est le cas pour le rotor de l'état de la technique (cf. figure 1b).

Afin de maximiser le couple produit par la machine, le rapport $\alpha$ entre un encombrement angulaire Dt d'une des zones de densité de flux magnétique rotorique ayant une valeur absolue sensiblement nulle et un encombrement angulaire Dp d'un pôle principal correspondant est compris entre 0.15 et 0.54, ce qui correspond à la plage P1 de la figure 6. Il est à noter que l'encombrement Dt correspond à l'encombrement angulaire de l'évidement 33 ou du pôle supplémentaire suivant le mode de réalisation choisi.

Ce rapport $\alpha$ est égal au rapport entre la distance angulaire dans l'entrefer Dt sur laquelle la densité de flux magnétique rotorique a une valeur absolue sensiblement nulle et la distance angulaire Dp d'une demi-période du signal de densité de flux magnétique rotorique (cf. figure 3). Comme cela ressort de la figure 6, une telle plage P1 de valeurs du rapport $\alpha$ permet d'augmenter substantiellement la valeur du couple maximal Cmax de la machine électrique. De préférence, le rapport $\alpha$ vaut 0.36 afin d'obtenir un couple maximal Cmax environ 30% supérieur à celui développé par une machine munie d'un rotor dépourvu de barrière de flux ($\alpha$=0), comme cela est mis en évidence par la flèche F.

On note également que le rapport $\alpha$ est directement lié à un rapport $\eta$ entre l'amplitude maximale du premier harmonique de la force électromotrice fem1 et l'amplitude maximale du troisième harmonique de la force électromotrice fem3, soit η=fem1/fem3. La plage P2 de valeurs du rapport η optimal situées entre 0.3 et 0.86 correspond ainsi à la plage P1 de valeurs du rapport α entre 0.15 et 0.54.

En outre, la machine présente avantageusement un coefficient égal à un nombre d'encoches par nombre de pôles principaux et par nombre de phases (coefficient SPP pour "slots per pole per phase") valant 0.5. Les cases du tableau de la figure 8 correspondant à un coefficient SPP valant 0.5 sont identifiées par une étoile. La famille de bobinages correspondante présente un facteur de bobinage de troisième harmonique élevé. Cela permet de maximiser la force électromotrice produite par la machine dans la mesure où cette dernière est la résultante de la densité de flux magnétique rotorique et du facteur de bobinage du stator.

Pour une machine à cinq phases A-E, on choisit donc la topologie de la figure 7 pour laquelle on a 20 encoches pour 8 pôles principaux. Les facteurs du bobinage du premier (k1) et troisième (k3) harmonique donnés par cette topologie sont respectivement k1=0.588 et k3=0.951. Chaque phase A à E de la machine se compose ainsi de p=4 bobines 25 identiques (p étant le nombre de paires de pôles principaux) concentrées autour des dents 20 et régulièrement distribuées dans le stator 17. Les bobines 25 peuvent être connectées en parallèles ou en séries suivant le nombre de spires nécessaires. Une telle topologie de bobinage concentrée présente en outre l'avantage de limiter les pertes par courants induits dans le rotor 10 et d'équilibrer de manière optimale les forces radiales autour la machine.

Comme cela est visible sur les figures 5a et 5b, le troisième harmonique de force électromotrice fem3 obtenu avec les machines munies d'un rotor 10 selon la figure 2a ou 2b et du stator 17 précité est très supérieur au troisième harmonique de force électromotrice fem3 obtenu avec les machines munies d'un rotor classique (cf. figure 1d). On note que le rapport η qui vaut respectivement 0.54 pour la machine munie du rotor de la figure 2a et 0.41 pour la machine munie du rotor de la figure 2b est bien compris entre 0.3 et 0.86 correspondant à la plage préférentielle P2.

Il est à noter également que même si le nombre de paires de pôles principaux du rotor 10 ainsi que le nombre d'encoches 18 du stator 17 recevant les bobinages peuvent varier selon les applications de la machine tournante, ces nombres seront choisis de manière à rester dans la famille des machines électriques ayant un coefficient SPP valant 0.5.

Il est possible de considérer une machine à cinq phases ou plus comme une machine ayant un couple dont l'origine provient au moins des deux harmoniques de force électromotrice, l'harmonique de rang 1 et l'harmonique de rang 3. Tant qu'il n'y a pas de phénomène de saturation (de la machine ou de l'onduleur) et/ou d'effet de réluctance variable, tant que la machine est régulièrement construite (c'est à dire qu'il est impossible de distinguer une phase d'une autre phase), alors il est possible de montrer que les deux fractions de couple dont la somme constitue le couple total sont créées par deux machines découplées magnétiquement, ces deux machines étant qualifiées de "fictives" dans la mesure où elles ne correspondent pas à une machine réelle. La machine fictive commandée essentiellement par un premier harmonique de courant (harmonique de rang 1) correspond à la machine dite principale. L'autre machine fictive commandée essentiellement par un troisième harmonique de courant (harmonique de rang 3) correspond à la machine dite secondaire. Les commandes de ces deux machines peuvent être indépendantes, chaque commande contrôlant l'injection d'un harmonique de courant parmi les harmoniques 1 et 3, l'harmonique 1 dans la machine principale, l'harmonique 3 dans la machine secondaire.

Par conséquent, le couple total C de la machine est la somme d'un couple C1 produit par le premier harmonique I1 de courant et d'un couple C2 produit par le troisième harmonique de courant. Ainsi, en négligeant l'effet de réluctance variable, on a:

$$C = C_1 + C_2 = \frac{5}{2} \times ( p \cdot \Phi_1 \cdot I_1 + 3 \cdot p \cdot \Phi_3 \cdot I_3 ) \qquad (1)$$

$(I_1, \Phi_1)$ : *l'amplitude Maximale d'harmonique* 1 *du* (*courant, flux d'aimants*)
$(I_3, \Phi_3)$ : *l'amplitude Maximale d'harmonique* 3 *du* (*courant, flux d'aimants*)
*p: nombre de paires de pôles*

Si la valeur efficace ($I_{efficace}$) maximale du courant est imposée, l'équation du couple (1) peut être réécrite de la manière suivante:

$$C = \frac{5}{2} \times \sqrt{2} \times ( p \cdot \Phi_1 \cdot r \cdot I_{efficace} + 3 \cdot p \cdot \Phi_3 \cdot \sqrt{1-r^2}\, I_{efficace} ) \qquad : r \in [0,1] \quad (2)$$

$$avec\ I_{efficace} = \sqrt{(I_1^2 + I_3^2)/2}\ \ et\ \ \ r = I_1 / \sqrt{I_1^2 + I_3^2}$$

La valeur optimale de r, qui maximise le couple, est calculée comme suit:

$$\frac{dC}{dr} = \frac{5}{2} \times \sqrt{2} \times (p \cdot \Phi_1 \cdot I_{efficace} + 3 \cdot \left[\frac{-r}{\sqrt{1-r^2}}\right] \cdot p \cdot \Phi_3 \cdot I_{efficace}) \quad si \quad \frac{dC}{dr} = 0 \Rightarrow$$

$$r = \frac{I_1}{Iefficace} = \frac{\dfrac{\Phi_1}{3 \times \Phi_3}}{\sqrt{1 + (\dfrac{\Phi_1}{3 \times \Phi_3})^2}} = \frac{\dfrac{fem_1}{fem_3}}{\sqrt{1 + (\dfrac{fem_1}{fem_3})^2}} \qquad (3)$$

fem1 et fem3 correspondant respectivement à l'amplitude maximale du premier et du troisième harmoniques de la force électromotrice de la machine électrique.

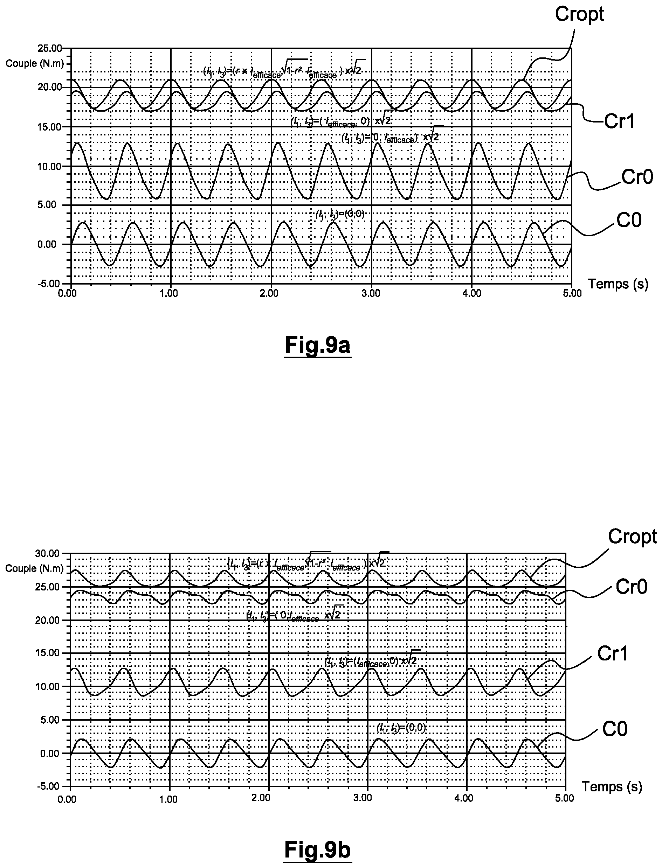

Les figures 9a et 9b représentent, pour différents cas de fonctionnement, le couple fourni respectivement par une machine munie d'un rotor conforme à la figure 1a et par une machine munie d'un rotor 10 conforme à la figure 2a ou 2b. Dans un premier cas, la machine principale fonctionne toute seule (r=1 - voir courbes Cr1 correspondantes). Dans un deuxième cas, la machine secondaire fonctionne toute seule (r=0 - voir courbes Cr0 correspondantes). Dans un troisième cas, les deux machines fonctionnent ensemble avec le rapport optimal r, dit rapport d'obtention de couple optimal (voir courbes Cropt correspondantes). La courbe C0 est la courbe de référence pour laquelle les premier et troisième harmoniques de courants I1, I3 sont nuls.

Ainsi, lorsque les machines fonctionnent ensemble suivant le rapport optimal (cf. courbes Cropt), on observe que le couple global est augmenté de manière substantielle pour passer de 19 Nm pour une machine munie d'un rotor classique à 26 N.m pour une machine munie d'un rotor conforme à la figure 2a ou 2b. La somme totale des amplitudes maximales du premier et du troisième harmoniques du flux dû aux aimants n'est toutefois pas augmentée par rapport à l'utilisation d'un rotor classique, ce qui présente un avantage pour la plage de fonctionnement à hautes vitesses en défluxage.

De préférence, on réduit peu à peu le troisième harmonique I3 de courant lorsque la vitesse augmente afin de limiter les pertes fer. Une faible réduction du troisième harmonique du courant (qui passe de 69A à 54.8A) conduit à une diminution du couple de 15.5 Nm à 14.5 Nm pour une diminution des pertes moyennes dans les aimants de 85W à 50 W pour des aimants 13 segmentés en quatre parties.

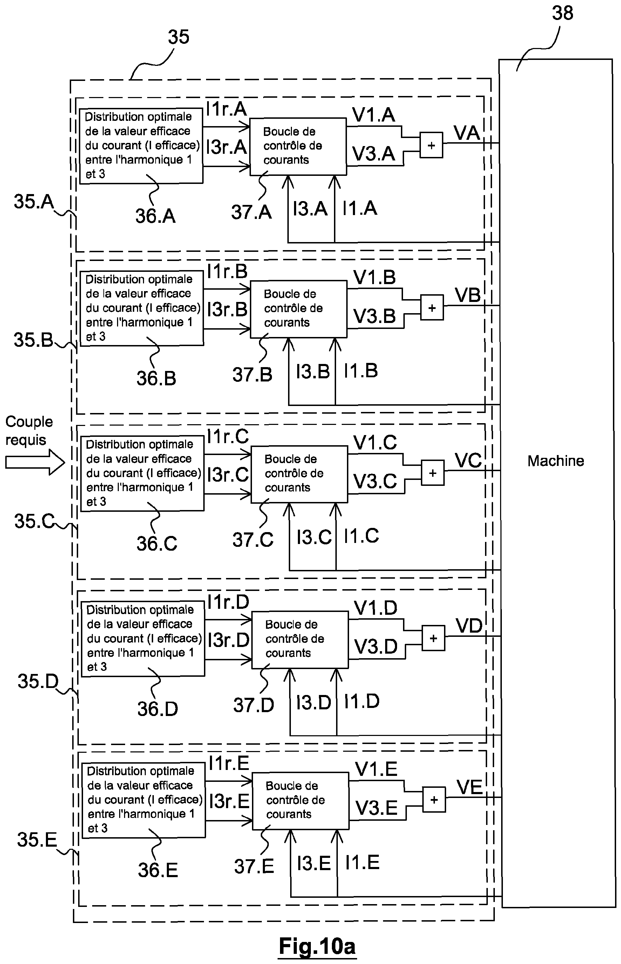

La figure 10a montre une représentation schématique fonctionnelle d'un système 35 de contrôle de la machine électrique selon l'invention. Ce système 35 comporte, pour chaque phase, un système de commande 35.A-35.E apte à déterminer à partir d'un couple requis une répartition optimale des premier I1r.A-I1r.E et troisième I3r.A-I3r.E harmoniques de courant de consigne. Ainsi, le module 36.A-36.E détermine un premier harmonique de courant de consigne I1r.A-I1r.E ayant une valeur efficace égale à une valeur efficace d'un courant pondérée par ledit rapport d'obtention de couple optimal, soit une valeur égale à r.I$_{efficace}$.

Le module 35 détermine également un troisième harmonique de courant de consigne I3r.A-I3r.E ayant une valeur efficace égale à $\sqrt{1-r^2} I_{efficace}$. Cela correspond aux courbes de fonctionnement Cropt.

En outre, pour chaque phase, la phase φ1r du premier harmonique de courant I1r de consigne est telle que le premier harmonique de courant I1r de consigne est en phase avec le premier harmonique de force électromotrice fem1 d'une des phases de la machine. Par ailleurs, la phase φ3r du troisième harmonique de courant I3r est telle que le troisième harmonique de courant I3r est en phase avec le troisième harmonique de force électromotrice fem3 de ladite une des phases de la machine électrique. Il s'agit d'une commande de type MTPA (acronyme pour "Maximum Torque Per Ampere" en anglais). La stratégie de commande sera modifiée à partir du moment où il sera nécessaire de défluxer la machine.

Les modules 37.A-37.E assurent, pour chaque phase, la régulation d'un premier V1 et d'un troisième V3 harmoniques de tension appliqués à la machine en fonction d'une comparaison entre les premier I1r.A-I1r.E et troisième I3r.A-I3r.E harmoniques de courant de consigne et des valeurs de premier I1.A-I1.E et troisième I3.A-I3.E harmoniques de courant mesurés ou estimés au niveau de la machine 38.

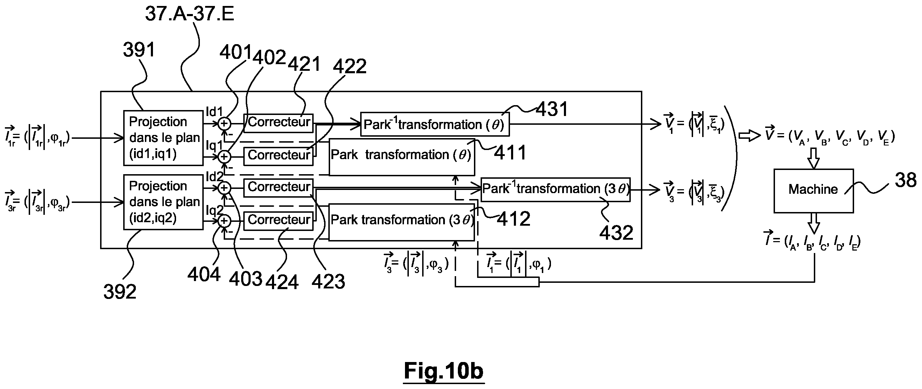

A cet effet, comme cela est illustré par la figure 10b, chacun des premier I1r et troisième I3r harmoniques de courant I1r et I3r est projetée sur deux axes en quadrature (id1, iq1) et (id2, iq2) via les modules 391, 392. Les deux plans (id1, iq1) et (id2, iq2) sont indépendants.

Pour chacun des premier et troisième harmoniques de courant, les deux composantes projetées (id1, iq1) et (id2, iq2) sont comparées au moyen des modules 401-404 avec leur composante correspondante issue de la projection sur deux axes en quadrature des courants I1, I3 mesurés ou estimés. Les projections du premier I1 et du troisième harmonique I3 de courant sont respectivement réalisées par les modules 411 et 412 de transformation de Park généralisée.

Les écarts entre les valeurs de consigne et les valeurs mesurées ou estimées de chaque composante des premier et troisième harmoniques de courant sont corrigés au moyen de modules 421-424 de type P, PI, ou PID.

Dans chaque plan, les modules 431, 432 appliquent ensuite une transformation inverse de Park généralisée sur les écarts corrigés de manière à obtenir respectivement les premier V1 et troisième V3 harmoniques de tension appliqués sur la machine électrique.


**Revendications**

1. Machine électrique tournante polyphasée à au moins cinq phases comportant un stator bobiné et un rotor (10), ledit rotor (10) étant séparé dudit stator (17) par un entrefer, ledit rotor (10) comportant un ensemble de pôles principaux de polarités alternées, ledit rotor (10) étant configuré de manière à maximiser un troisième harmonique d'une densité de flux magnétique rotorique dans ledit entrefer de ladite machine électrique, **caractérisée en ce que** l'entrefer comporte des zones (31) de densité de flux magnétique rotorique ayant une valeur absolue sensiblement nulle qui s'étend sensiblement au milieu d'un pôle principal correspondant.

2. Machine selon la revendication 1, **caractérisée en ce que** chaque zone (31) de densité de flux magnétique rotorique ayant une valeur absolue sensiblement nulle est générée par un évidement ménagé dans une périphérie externe dudit rotor (10).

3. Machine selon la revendication 1 ou 2, **caractérisée en ce que** chaque zone (31) de densité de flux magnétique rotorique ayant une valeur absolue sensiblement nulle est générée par un pôle supplémentaire ayant une polarité inversée par rapport à une polarité d'un pôle principal correspondant dudit rotor.

4. Machine selon la revendication 3, **caractérisée en ce que** chaque pôle supplémentaire est formé par deux aimants permanents (36) situés en vis-à-vis l'un par rapport à l'autre.

5. Machine selon la revendication 4, **caractérisée en ce que** des chambres d'air (38) sont positionnées au niveau d'une extrémité de chaque aimant permanent (36).

6. Machine selon l'une quelconque des revendications 1 à 5, **caractérisée en ce qu'**un rapport (a) entre un encombrement angulaire (Dt) d'une desdites zones (31) de densité de flux magnétique rotorique ayant une valeur absolue sensiblement nulle et un encombrement angulaire (Dp) d'un pôle principal est compris entre 0.15 et 0.54.

7. Machine selon l'une quelconque des revendications 1 à 6, **caractérisée en ce qu'**un coefficient égal au nombre d'encoches du stator (17) par nombre de pôles principaux et par nombre de phases (SPP) vaut 0.5.

8. Machine selon la revendication 7, **caractérisée en ce qu'**elle comporte cinq phases et 20 encoches ménagées dans le stator pour 8 pôles principaux rotoriques.


**Patentansprüche**

1. Mehrphasige elektrische drehende Maschine mit mindestens fünf Phasen, die einen bewickelten Stator und eine Rotor (10) umfasst, wobei der Rotor (10) durch einen Luftspalt von dem Stator (17) getrennt ist, wobei der Rotor (10) eine Anordnung von Hauptpolen mit abwechselnden Polaritäten umfasst, wobei der Rotor (10) dazu konfiguriert ist, eine dritte Harmonische einer magnetischen Rotordurchflutungsdichte in dem Luftspalt der elektrischen Maschine zu maximieren, **dadurch gekennzeichnet, dass** der Luftspalt Bereiche (31) mit einer magnetischen Rotordurchflutungsdichte mit einem absoluten Wert im Wesentlichen gleich Null umfasst, die sich im Wesentlichen in der Mitte eines entsprechenden Hauptpols erstrecken.

2. Maschine nach Anspruch 1, **dadurch gekennzeichnet, dass** jeder Bereich (31) mit einer magnetischen Rotordurchflutungsdichte mit einem absoluten Wert im Wesentlichen gleich Null durch eine Aussparung erzeugt wird, die in einem äußeren Rand des Rotors (10) eingerichtet ist.

3. Maschine nach Anspruch 1 oder 2, **dadurch gekennzeichnet, dass** jeder Bereich (31) mit einer magnetischen Rotordurchflutungsdichte mit einem absoluten Wert im Wesentlichen gleich Null durch einen zusätzlichen Pol erzeugt wird, der eine im Verhältnis zu einer Polarität eines entsprechenden Hauptpols des Rotors umgekehrte Polarität aufweist.

**4.** Maschine nach Anspruch 3, **dadurch gekennzeichnet, dass** jeder zusätzliche Pol durch zwei Permanentmagneten (36) gebildet wird, die sich gegenüberliegen.

**5.** Maschine nach Anspruch 4, **dadurch gekennzeichnet, dass** im Bereich eines Endes jedes Permanentmagneten (36) Luftkammern (38) angeordnet sind.

**6.** Maschine nach einem der Ansprüche 1 bis 5, **dadurch gekennzeichnet, dass** ein Verhältnis ($\alpha$) zwischen einem Winkelmaß (Dt) einer der Bereiche (31) mit einer magnetischen Rotordurchflutungsdichte mit einem absoluten Wert im Wesentlichen gleich Null und einem Winkelmaß (Dp) eines Hauptpols zwischen 0,15 und 0,54 liegt.

**7.** Maschine nach einem der Ansprüche 1 bis 6, **dadurch gekennzeichnet, dass** ein Koeffizient, der der Anzahl von Schlitzen des Stators (17) pro Anzahl von Hauptpolen und pro Anzahl von Phasen (SPP) entspricht, 0,5 beträgt.

**8.** Maschine nach Anspruch 7, **dadurch gekennzeichnet, dass** sie fünf Phasen und 20 Schlitze, die für 8 Rotorhauptpole in den Stator eingebracht sind, umfasst.

**Claims**

**1.** Polyphase rotating electrical machine with at least five phases comprising a wound stator and a rotor (10), said rotor (10) being separated from said stator (17) by an airgap, said rotor (10) comprising a set of main poles of alternating polarities, said rotor (10) being configured so as to maximize a third harmonic of a rotor magnetic flux density in said airgap of said electrical machine, **characterized in that** the airgap comprises zones (31) of rotor magnetic flux density having a substantially nil absolute value which extend substantially to the middle of a corresponding main pole.

**2.** Machine according to Claim 1, **characterized in that** each zone (31) of rotor magnetic flux density having a substantially nil absolute value is generated by a void formed in an outer periphery of said rotor (10) .

**3.** Machine according to Claim 1 or 2, **characterized in that** each zone (31) of rotor magnetic flux density having a substantially nil absolute value is generated by an additional pole having a reverse polarity relative to a polarity of a corresponding main pole of said rotor.

**4.** Machine according to Claim 3, **characterized in that** each additional pole is formed by two permanent magnets (36) situated facing one another.

**5.** Machine according to Claim 4, **characterized in that** air chambers (38) are positioned at an end of each permanent magnet (36).

**6.** Machine according to any one of Claims 1 to 5, **characterized in that** a ratio (a) between an angular size (Dt) of said zones (31) of rotor magnetic flux density having a substantially nil absolute value and an angular size (Dp) of a main pole is between 0.15 and 0.54.

**7.** Machine according to any one of Claims 1 to 6, **characterized in that** a coefficient equal to a number of notches of the stator (17) per number of main poles and per number of phases (SPP) is 0.5.

**8.** Machine according to Claim 7, **characterized in that** it comprises five phases and 20 notches formed in the stator for 8 main rotor poles.

**Fig.1a**

Densité de flux

**Fig.1b**

flux
(Weber)x10$^{-4}$

**Fig.1c**

f.e.m
(Volts)

$$\eta = \frac{fem1}{fem3} = \frac{1.37}{0.66} = 2.1$$

fem1   fem3

**Fig.1d**

**Fig.2a**

**Fig.2b**

Densité de flux

**Fig.3**

Flux
(Weber)x10$^{-4}$

**Fig.4a**

(Volts)f.e.m

**Fig.5a**

$$\eta = \frac{fem1}{fem3} = \frac{0.92}{1.69} = 0.54$$

fem1   fem3

Flux
(Weber)x10$^{-4}$

**Fig.4b**

(Volts)f.e.m

**Fig.5b**

$$\eta = \frac{fem1}{fem3} = \frac{0.79}{1.94} = 0.41$$

fem1   fem3

Couple maximal

$(C_{max})$

**Fig.6**

**Fig.7**

| Slots/Poles | 2 | 4 | 6 | 8 | 10 | 12 | 14 | 16 | 18 |
|---|---|---|---|---|---|---|---|---|---|
| 5   harm1 | 0.5878* | 0.9511 | 0.9511 | 0.5878* | | 0.5878* | 0.9511 | 0.9511 | 0.5878* |
|     harm3 | 0.9511 | 0.5878 | 0.5878 | 0.9511 | | 0.9511 | 0.5878 | 0.5878 | 0.9511 |
| 10  harm1 | | 0.5878* | 0.809 | 0.9511 | | 0.9511 | 0.809 | 0.5878* | |
|     harm3 | | 0.9511 | 0.309 | 0.5878 | | 0.5878 | 0.309 | 0.9511 | |
| 15  harm1 | | | 0.5878* | | | 0.9511 | 0.9800 | 0.9800 | 0.9511 |
|     harm3 | | | 0.9511 | | | 0.5878 | 0.8300 | 0.8300 | 0.5878 |
| 20  harm1 | | | | 0.5878* | | 0.809 | 0.88 | 0.9511 | 0.9755 |
|     harm3 | | | | 0.9511 | | 0.309 | 0.139 | 0.5878 | 0.7939 |
| 25  harm1 | | | | | 0.5878* | | | | 0.85 |
|     harm3 | | | | | 0.9511 | | | | 0.128 |

**Fig.8**

**Fig.9a**

**Fig.9b**

**Fig.10a**

37.A-37.E

391  401 402 421  422

$\vec{I}_{1r} = (|\vec{I}_{1r}|, \varphi_{1r})$ → Projection dans le plan (id1,iq1) → Id1 ⊕ → Correcteur → Park⁻¹transformation ($\theta$) — 431 → $\vec{V}_1 = (|\vec{V}_1|, \xi_1)$

Iq1 ⊕ → Correcteur → Park transformation ($\theta$) 411

$\vec{I}_{3r} = (|\vec{I}_{3r}|, \varphi_{3r})$ → Projection dans le plan (id2,iq2) → Id2 ⊕ → Correcteur → Park⁻¹transformation (3$\theta$) → $\vec{V}_3 = (|\vec{V}_3|, \xi_3)$

Iq2 ⊕ → Correcteur → Park transformation (3$\theta$) 412

392

404 403 424 423

$\vec{I}_3 = (|\vec{I}_3|, \varphi_3)$   $\vec{I}_1 = (|\vec{I}_1|, \varphi_1)$

432

$\vec{V} = (V_A, V_B, V_C, V_D, V_E)$

Machine — 38

$\vec{I} = (I_A, I_B, I_C, I_D, I_E)$

**Fig.10b**

16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0803962 A
- EP 0831580 A
- US 5053689 A
- US 20130093284 A